# EUROPÄISCHE PATENTANMELDUNG

(11) **EP 2 071 219 A2**
(43) Veröffentlichungstag der Anmeldung: **17.06.2009**
(21) Anmeldenummer: 08018460.9
(22) Anmeldetag: 22.10.2008
(51) Int. Cl.: F16K 15/18, F01P 7/14

(54) **Kupplung zum Verbinden zweier Kühlsystemabschnitte**

(30) Priorität: 08.12.2007 DE 202007017181 U
(71) Anmelder: NORMA Germany GmbH, 63477 Maintal (DE)
(72) Erfinder: Bahlke, Matthias, 63571 Gelnhausen (DE); Bauer, Andreas, 63477 Maintal (DE)
(74) Vertreter: Knoblauch, Andreas

(57) **Zusammenfassung**

Es wird eine Kupplung (1) angegeben zum Verbinden eines ersten Kühlsystemabschnitts mit einem zweiten Kühlsystemabschnitt mit einem Kupplungsgehäuse (2, 3), das einen ersten Anschlussbereich (5) und einen zweiten Anschlussbereich (6) aufweist.

Man möchte eine Kupplung für ein Kühlsystem so ausgestalten, dass das Kühlsystem in weiten Bereichen mit optimaler Temperatur arbeiten kann.

Hierzu ist vorgesehen, dass zwischen dem ersten Anschlussbereich (5) und dem zweiten Anschlussbereich (6) eine Schließeinrichtung (8) angeordnet ist, die in eine Schließrichtung vorgespannt ist und durch einen Fluiddruck in eine Öffnungsrichtung bewegbar ist.

## Beschreibung

Die Erfindung betrifft eine Kupplung zum Verbinden eines ersten Kühlsystemabschnitts mit einem zweiten Kühlsystemabschnitt mit einem Kupplungsgehäuse, das einen ersten Anschlussbereich und einen zweiten Anschlussbereich aufweist.

Eine derartige Kupplung wird beispielsweise verwendet, um in einem Kühlwassersystem eines Kraftfahrzeug-Motors einen Kühlwasserschlauch mit einem Anschluss am Motor oder am Kühler zu verbinden. Hierbei ist vielfach der erste Anschlussbereich so ausgebildet, dass er mit einem Kupplungs-Gegenstück lösbar verbunden werden kann, während der zweite Anschlussbereich fest mit einem Kühlwasserschlauch oder fest mit einem Bauelement, wie Motor oder Kühler, verbunden ist.

In einem Kühlsystem zirkuliert Kühlwasser oder eine andere Kühlflüssigkeit, um Wärme, die ein Verbrennungsmotor im Betrieb erzeugt, abzuführen. Um einen möglichst geringen Schadstoffausstoß zu erreichen, sollte der Verbrennungsmotor immer auf einer vorbestimmten Arbeitstemperatur sein, die durch das Kühlsystem, das die Kupplung enthält, sichergestellt werden muss.

Der Erfindung liegt die Aufgabe zugrunde, eine Kupplung für ein Kühlsystem so auszugestalten, dass das Kühlsystem in weiten Bereichen mit optimaler Temperatur arbeiten kann.

Diese Aufgabe wird bei einer Kupplung der eingangs genannten Art dadurch gelöst, dass zwischen dem ersten Arbeitsbereich und dem zweiten Arbeitsbereich eine Schließeinrichtung angeordnet ist, die in eine Schließrichtung vorgespannt ist und durch einen Fluiddruck in eine Öffnungsrichtung bewegbar ist.

Mit einer derartigen Kupplung wird ein Strom des Kühlfluids, beispielsweise des Kühlwassers, verhindert oder zumindest stark gedrosselt, wenn die Schließeinrichtung geschlossen ist. In diesem Fall kann die Kühlflüssigkeit keine Wärme vom Motor abtransportieren, so dass der Motor sehr schnell die gewünschte Betriebstemperatur erreichen kann. Je schneller der Motor die Betriebstemperatur erreicht, desto geringer ist der Schadstoffausstoß. Gerade bei Kraftfahrzeugen, die oft nur über kurze Strecken bewegt werden und bei denen der Motor bislang nur unzulänglich erwärmt wurde, trägt dies zu einer ganz erheblichen Verminderung des Schadstoffausstoßes bei. Wenn der Motor die gewünschte Betriebstemperatur erreicht hat, dann muss weitere Wärme, die durch den Betrieb des Motors zugeführt wird, abgeführt werden. In diesem Fall erzeugt man einen Fluidstrom, beispielsweise durch Inbetriebnahme einer Kühlflüssigkeitspumpe oder durch einen Thermosyphon-Effekt im Kühlsystem. Dieser Strom ist in der Lage, die in Schließrichtung vorgespannte Schließeinrichtung zu öffnen, so dass mit Hilfe der Kühlflüssigkeit die im Motor entstehende Wärme zu einem Kühler oder einem anderen Wärmetauscher abgeführt werden kann.

Vorzugsweise weist die Schließeinrichtung mindestens eine verschwenkbare Klappe auf. Eine Klappe ist ein relativ einfaches Konstruktionselement. Sie lässt sich zum Einen mit einem relativ geringen Aufwand in der Kupplung festlegen, so dass sie unverlierbar gehalten ist. Zum Anderen ist eine Klappe aber auch in der Lage, einen Strömungsquerschnitt relativ weitgehend freizugeben, wenn die Schließeinrichtung durch den Fluiddruck geöffnet wird. Man kann mehrere Klappen verwenden, wenn zum Öffnen der Schließeinrichtung nur ein beschränkter Bauraum zur Verfügung steht. Die Schließeinrichtung hat aber ein besseres Schließverhalten, wenn man nur eine einzelne Klappe verwendet.

Vorzugsweise ist die Schließeinrichtung als Modul ausgebildet, das wahlweise in das Kupplungsgehäuse, ein Anschlussstück oder auch aggregatseitig einsetzbar ist. Man kann die Schließeinrichtung also außerhalb des Kupplungsgehäuses vollständig fertigen und auf Dichtigkeit und Funktionsfähigkeit prüfen, bevor es in das Kupplungsgehäuse eingesetzt wird. Dies erleichtert die Herstellung.

Bevorzugterweise weist das Kupplungsgehäuse mindestens zwei Teile auf, die das Modul zwischen sich aufnehmen. Die beiden Teile des Kupplungsgehäuses können dann, wenn das Modul eingesetzt ist, miteinander verbunden werden, beispielsweise durch Kleben, Verrasten oder Schweißen, insbesondere Reibschweißen. Wenn das Kupplungsgehäuse zwischen den beiden Teilen angeordnet ist, dann ist es fixiert. Die beiden Teile des Kupplungsgehäuses sind in Durchflussrichtung vorzugsweise hintereinander angeordnet, so dass das Modul gegen die Kraft der Strömung des Kühlfluids durch das Kupplungsgehäuse selbst gehalten ist.

Vorzugsweise ist die Klappe mit einem Fortsatz in einem Klappengehäuse schwenkbar gelagert. Der Fortsatz umgreift dann eine Achse, die im Klappengehäuse angeordnet ist. Durch den Fortsatz ist es möglich, dass die Klappe den Strömungsquerschnitt nahezu vollständig freigibt.

Vorzugsweise weist das Klappengehäuse eine durch die Klappe verschließbare Öffnung auf, deren wirksamer Durchmesser dem Nenndurchmesser der Kupplung entspricht. Durch die Schließeinrichtung wird also keine wesentliche Drosselung der Strömung des Kühlfluids durch die Kupplung erzeugt. Eine kleine Drosselung kann sich allerdings dadurch ergeben, dass die Klappe durch das Kühlfluid nicht vollständig aufgedrückt wird.

Vorzugsweise ist die Klappe durch eine Torsionsfeder vorgespannt. Eine Torsionsfeder benötigt nur wenig Bauraum. Sie lässt sich leicht im Klappengehäuse unterbringen, ist aber dennoch in der Lage, die notwendige Vorspannkraft in Schließrichtung zu erzeugen. Eine Torsionsfeder lässt sich mit geringem Aufwand an die notwendigen Kräfte anpassen.

Vorzugsweise liegt die Klappe in geschlossenem Zustand an einem Klappensitz an. Diese Ausgestaltung hat zwei Vorteile. Zum Einen ist die Bewegung der Klappe in Schließrichtung begrenzt. Zum Anderen ergibt sich eine gute Dichtigkeit der Schließeinrichtung, so dass der Durchtritt von Kühlfluid weitgehend unterbunden werden kann, wenn er nicht gewünscht ist.

Auch ist von Vorteil, wenn der Klappensitz in einer Vertiefung im Klappengehäuses angeordnet ist. Die Klappe ist in geschlossenem Zustand dann gegen seitliche Bewegungen gesichert, so dass sie auch durch Vibrationen oder Stöße nicht seitlich verschoben werden kann.

Vorzugsweise weist das Kupplungsgehäuse einen Klappenschwenkraum auf, der in einem Teilbereich von einer flachen Kupplungsanlagefläche begrenzt ist. Das Kupplungsgehäuse ist in der Regel mit Leitungen oder Stutzen verbunden, die einen kreisrunden Querschnitt haben. Dementsprechend ist das Kupplungsgehäuse in weiten Teilen ebenfalls mit zylinderförmigen Abschnitten versehen. Von dieser Ausgestaltung weicht man im Bereich der Klappenanlagefläche ab. Diese ist flach ausgebildet, d.h. die Klappe kann eben ausgebildet sein und dennoch vollständig geöffnet werden.

Vorzugsweise weist das Kupplungsgehäuse im ersten Anschlussbereich eine lösbare Anschlussgeometrie und im zweiten Anschlussbereich eine fixierbare Anschlussgeometrie auf und die Klappenanlagefläche ist dem zweiten Anschlussbereich benachbart angeordnet. Wie eingangs erwähnt, wird das Kupplungsgehäuse im ersten Anschlussbereich lösbar mit einem Kupplungsgegenstück verbunden. Im zweiten Anschlussbereich ist hingegen ein Schlauch oder eine andere Leitung fest mit dem Kupplungsgehäuse verbunden, beispielsweise durch ein Befestigungsmittel, wie eine Schlauchschelle. Die Klappe öffnet sich zum zweiten Anschlussbereich, so dass die lösbare Verbindung zwischen dem Kupplungsgehäuse und dem Kupplungsgegenstück durch die Schließeinrichtung nicht behindert wird.

Die Erfindung wird im Folgenden anhand von bevorzugten Ausführungsbeispielen in Verbindung mit der Zeichnung beschrieben. Hierin zeigen:
- Fig. 1: eine erste Ausführungsform einer Kupplung im Schnitt,
- Fig. 2: die Kupplung in perspektivischer Darstellung,
- Fig. 3: ein Modul einer Schließeinrichtung im Schnitt,
- Fig. 4: das Modul in perspektivischer Darstellung,
- Fig. 5: eine zweite Ausführungsform einer Kupplung im Schnitt und
- Fig. 6: ein Modul für die zweite Ausführungsform.

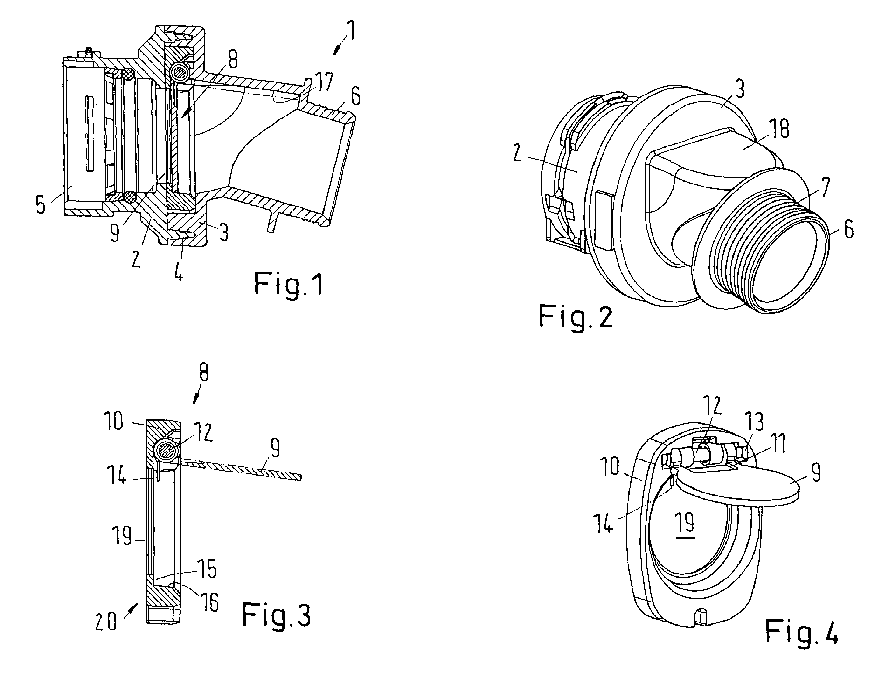

Fig. 1 zeigt im Schnitt eine Kupplung 1 mit einem Kupplungsgehäuse, das ein erstes Teil 2 und ein zweites Teil 3 aufweist. Die beiden Teile sind entlang einer Verbindungsgeometrie 4 miteinander hermetisch dicht verbunden, beispielsweise durch Reibschweißen, Kleben, Ultraschallschweißen oder dergleichen.

Das erste Teil 2 weist einen ersten Anschlussbereich 5 auf, in den ein Kupplungsgegenstück eingeführt werden kann. Das Kupplungsgegenstück rastet dann im ersten Teil 2 ein, d.h. es ist eine lösbare Verbindung vorgesehen.

Das zweite Teil 3 weist einen zweiten Anschlussbereich 6 auf, auf den ein Schlauch aufgeschoben und beispielsweise mit Hilfe einer Schlauchschelle festgehalten werden kann. Der zweite Anschlussbereich 6 weist daher eine fixierbare Anschlussgeometrie auf, beispielsweise eine Rillung 7 am Umfang.

Zwischen dem ersten Teil 2 und dem zweiten Teil 3 ist eine Schließeinrichtung 8 angeordnet, die anhand der Fig. 3 und 4 näher beschrieben wird.

Die Schließeinrichtung 8 weist eine Klappe 9 auf, die in einem Klappengehäuse 10 verschwenkbar gelagert ist. Hierzu weist die Klappe 9 einen Fortsatz 11 auf, der mit einer Schwenkachse 12 in Eingriff steht, die wiederum im Klappengehäuse 10 gelagert ist. Hierzu weist das Klappengehäuse 10 eine Nut 13 auf, die offen ist. Die Nut 13 wird durch das zweite Teil 3 des Gehäuses verschlossen, wenn das Klappengehäuse 10 zwischen den beiden Gehäuseteilen 2, 3 angeordnet wird.

Die Klappe 9 wird durch eine Torsionsfeder 14 in die in Fig. 1 dargestellte Schließstellung vorgespannt, d.h. in Schließrichtung. Die Klappe 9 wird durch einen Flüssigkeitsstrom, der die Kupplung 1 von links nach rechts (bezogen auf die Darstellung der Fig. 1 und 3) durchströmt, in die in den Fig. 3 und 4 dargestellte Öffnungsstellung bewegt.

Das Klappengehäuse 10 weist einen Klappensitz 15 auf, an dem die Klappe 9 im geschlossenen Zustand der Schließeinrichtung 8 anliegt. Der Klappensitz 15 ist dabei in einer Vertiefung 16 im Klappengehäuse 10 angeordnet. Durch die Vertiefung 16 wird die Klappe 9 im geschlossenen Zustand gegen seitliche, d.h. radiale Bewegungen geschützt.

Im geöffneten Zustand liegt die Klappe 9, wie dies in Fig. 1 mit strichpunktierten Linien dargestellt ist, an einer Klappenanlagefläche 17 an, die flach ausgebildet ist. Die Außenseite der Klappenanlagefläche 17 wird durch eine ebene Fläche 18 gebildet, die aus Fig. 2 zu erkennen ist. Die flache oder ebene Klappenanlagefläche 17 stellt sicher, dass die Klappe 9 praktisch vollständig geöffnet werden kann.

Die Klappe 9 verschließt im geschlossenen Zustand eine Öffnung 19 im Klappengehäuse 10. Diese Öffnung weist den gleichen Nenndurchmesser wie die Kupplung 1 auf. Durch die Schließeinrichtung 1 wird, wenn die Klappe 9 geöffnet ist, der Strom des Kühlfluids durch die Kupplung 1 praktisch nicht behindert.

Die Klappe öffnet sich zum zweiten Anschlussbereich 6 hin, d.h. sie steht unabhängig von ihrer Stellung einer lösbaren Verbindung der Kupplung 1 mit einem Gegenkupplungselement nicht im Wege.

Die Schließeinrichtung 8 ist als Modul 20 ausgebildet, das alle Elemente der Schließeinrichtung 8 enthält, also die Klappe 9, das Klappengehäuse 10 und die Torsionsfeder 14. Dieses Modul 20 lässt sich außerhalb der Kupplung 1 fertigstellen und auf Funktionsfähigkeit und Dichtigkeit prüfen. Es muss nach seiner Fertigstellung lediglich vor dem Zusammensetzen der beiden Teile 2, 3 der Kupplung 1 zwischen den beiden Teilen 2, 3 angeordnet werden. Wenn die beiden Teile 2, 3 miteinander verbunden sind, ist die Kupplung 1 mit Klappe 9 fertig.

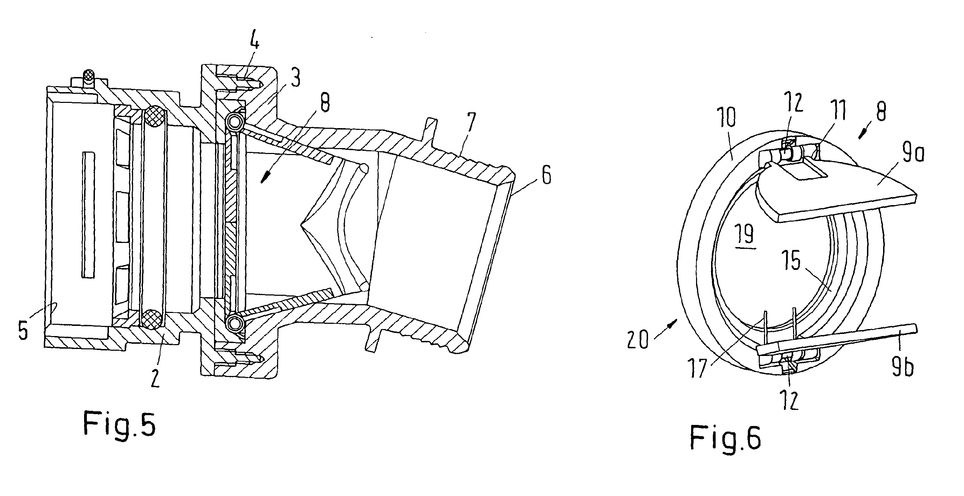

Die Fig. 5 und 6 zeigen eine abgewandelte Ausgestaltung, bei der gleiche und einander entsprechende Elemente mit den gleichen Bezugszeichen versehen sind.

Die Schließeinrichtung 8 weist in diesem Fall ein Klappengehäuse 10 mit zwei Klappen 9a, 9b auf, die diametral gegenüberliegend jeweils mit Hilfe einer Schwenkachse 12 im Klappengehäuse 10 angeordnet sind. Auch hier liegen die beiden Klappen 9a, 9b im geschlossenen Zustand an einem Klappensitz 15 an.

Eine derartige Ausgestaltung ist beispielsweise dann von Vorteil, wenn in Öffnungsrichtung der Klappen 9a, 9b weniger Platz zur Verfügung steht als bei der Ausgestaltung nach den Fig. 1 bis 4.

Eine derartige Kupplung lässt sich beispielsweise in einem Kühlsystem eines Kraftfahrzeugs mit Verbrennungsmotor verwenden, bei dem die Kühlwasserpumpe abschaltbar ist. Wenn der Verbrennungsmotor gestartet wird, dann ist die Kühlwasserpumpe abgeschaltet, so dass kein Umlauf von Kühlwasser durch das Kühlsystem des Motors erfolgt. Die Schließeinrichtung 8 sichert dagegen, dass auch durch thermische Wirkungen kein Umlauf des Kühlwassers erzeugt wird. Da das Kühlwasser nicht umläuft, kann es auch keine Wärme vom Verbrennungsmotor abtransportieren. Der Verbrennungsmotor erreicht daher sehr schnell seine Betriebstemperatur.

Wenn die Betriebstemperatur erreicht ist, wird die Kühlwasserpumpe in Funktion gesetzt, beispielsweise durch einen Elektromotor angetrieben. In diesem Fall drückt das Kühlwasser die Klappe 9 bzw. 9a, 9b auf und es kann sich ein Kühlwasserumlauf einstellen, der durch die Schließeinrichtung 8 praktisch nicht behindert wird.

## Patentansprüche

1. Kupplung zum Verbinden eines ersten Kühlsystemabschnitts mit einem zweiten Kühlsystemabschnitt mit einem Kupplungsgehäuse, das einen ersten Anschlussbereich und einen zweiten Anschlussbereich aufweist, **dadurch gekennzeichnet, dass** zwischen dem ersten Anschlussbereich (5) und dem zweiten Anschlussbereich (6) eine Schließeinrichtung (8) angeordnet ist, die in eine Schließrichtung vorgespannt ist und durch einen Fluiddruck in eine Öffnungsrichtung bewegbar ist.

2. Kupplung nach Anspruch 1, **dadurch gekennzeichnet, dass** die Schließeinrichtung (8) mindestens eine verschwenkbare Klappe (9; 9a, 9b) aufweist.

3. Kupplung nach Anspruch 1 oder 2, **dadurch gekennzeichnet, dass** die Schließeinrichtung (8) als Modul (20) ausgebildet ist, das in das Kupplungsgehäuse (2, 3) eingesetzt ist.

4. Kupplung nach Anspruch 3, **dadurch gekennzeichnet, dass** das Kupplungsgehäuse (2, 3) mindestens zwei Teile (2, 3) aufweist, die das Modul (20) zwischen sich aufnehmen.

5. Kupplung nach Anspruch 4, **dadurch gekennzeichnet, dass** die Klappe (9; 9a, 9b) mit einem Fortsatz (11) in einem Klappengehäuse (10) schwenkbar gelagert ist.

6. Kupplung nach Anspruch 5, **dadurch gekennzeichnet, dass** das Klappengehäuse (10) eine durch die Klappe (9; 9a, 9b) verschließbare Öffnung (19) aufweist, deren wirksamer Durchmesser dem Nenndurchmesser der Kupplung (1) entspricht.

7. Kupplung nach einem der Ansprüche 2 bis 6, **dadurch gekennzeichnet, dass** die Klappe (9; 9a, 9b) durch eine Torsionsfeder (17) vorgespannt ist.

8. Kupplung nach einem der Ansprüche 2 bis 7, **dadurch gekennzeichnet, dass** die Klappe (9; 9a, 9b) im geschlossenen Zustand an einem Klappensitz (15) anliegt.

9. Kupplung nach Anspruch 8, **dadurch gekennzeichnet, dass** der Klappensitz (15) in einer Vertiefung (16) im Klappengehäuse (10) angeordnet ist.

10. Kupplung nach einem der Ansprüche 2 bis 9, **dadurch gekennzeichnet, dass** das Kupplungsgehäuse (2, 3) einen Klappenschwenkraum aufweist, der in einem Teilbereich von einer flachen Klappenanlagefläche (17) begrenzt ist.

11. Kupplung nach Anspruch 10, **dadurch gekennzeichnet, dass** das Kupplungsgehäuse (2, 3) im ersten Anschlussbereich (5) eine lösbare Anschlussgeometrie und im zweiten Anschlussbereich (6) eine fixierbare Anschlussgeometrie aufweist und die Klappenanlagefläche (17) dem zweiten Anschlussbereich (6) benachbart angeordnet ist.
